# FASCICULE DE BREVET EUROPEEN

(11) **EP 2 048 078 B1**
(45) Date de publication et mention de la délivrance du brevet: **21.04.2010**
(21) Numéro de dépôt: 08017091.3
(22) Date de dépôt: 29.09.2008
(51) Int. Cl.: B64C 25/14, B64C 25/22, B64C 25/60

(54) **Vérin de rétraction, atterrisseur de giravion muni d'un tel vérin de rétraction**
Einfahrzylinder und mit einem solchen Einfahrzylinder ausgestattetes Fahrwerk eines Drehflügelflugzeugs
Retraction jack, rotorcraft landing gear equipped with such a retraction jack

(30) Priorité: 11.10.2007 FR 0707129
(43) Date de publication de la demande: 15.04.2009
(73) Titulaire: EUROCOPTER, 13725 Marignane Cédex (FR)
(72) Inventeur: Lassus, Vincent, 13001 Marseille (FR); Talon, Benjamin, 46000 Cahors (FR)
(74) Mandataire: GPI & Associés

(56) Documents cités:
- FR-A- 2 687 123
- US-A- 5 337 976

## Description

La présente invention concerne un vérin de rétraction ainsi qu'un atterrisseur de giravion équipé d'un tel vérin, un atterrisseur étant dénommé « train d'atterrissage » par l'homme du métier.

L'invention se situe donc dans le domaine des trains d'atterrissages de giravions,

On connaît un premier type d'atterrisseur dit « à balancier » muni d'une jambe de train solidarisée à la structure du giravion, via une attache, de manière à pouvoir effectuer un mouvement rotatif autour de cette attache.

Cette jambe de train comporte un amortisseur et un ensemble roulant pourvu d'au moins une roue.

Par ailleurs, l'atterrisseur possède un vérin de rétraction, dénommé parfois « vérin de contre-fiche » par l'homme du métier.

Le vérin de rétraction a alors pour but d'escamoter l'atterrisseur pour le faire entrer dans un caisson du giravion lors d'un vol de ce dernier, ou pour le faire sortir de ce caisson lors d'un atterrissage, en faisant pivoter la jambe de train autour de son attache.

De plus, le vérin de rétraction est parfois sollicité horizontalement, à savoir selon une direction sensiblement parallèle au sol, afin de maintenir la jambe de train sortie lorsque le giravion roule sur le sol.

Plus précisément, le vérin de rétraction maintient la jambe de train sortie quels que soient les obstacles, une pierre par exemple, rencontrés par l'ensemble roulant de l'atterrisseur.

A contrario, l'amortisseur est uniquement sollicité verticalement dans la mesure où cet amortisseur a pour fonction d'amortir les chocs exercés sur l'atterrisseur lors d'un atterrissage.

Par conséquent, l'atterrisseur est classiquement équipé d'un amortisseur sollicité uniquement par des chocs verticaux. De plus, l'atterrisseur comporte un vérin de rétraction qui permet d'une part de faire rentrer ou sortir l'atterrisseur dans un caisson et, d'autre part, de maintenir en position la jambe de train de l'atterrisseur lorsque cette jambe de train est sortie du caisson, indépendamment des sollicitations horizontales exercées sur la jambe de train.

En outre, un vérin de rétraction est généralement muni d'une chambre de rétraction et d'une chambre d'extension ainsi que d'un piston coulissant dans un fourreau cylindrique, les chambres de rétraction et d'extension étant séparées par la tête du piston.

Par ailleurs, les chambres de rétraction et d'extension sont reliées à un circuit hydraulique.

Pour escamoter la jambe de train, un organe de commande du giravion injecte un fluide, de l'huile par exemple, dans la chambre de rétraction par un port de rétraction. La pression exercée par ce fluide sur la tête du piston entraîne une rétraction de ce piston.

Or, le piston étant par ailleurs articulé sur la jambe de train, une rétraction du piston provoque un mouvement rotatif de cette jambe de train et ainsi son escamotage dans le caisson du giravion prévu à cet effet.

A contrario, pour sortir la jambe de train, un organe de commande du giravion injecte un fluide dans la chambre d'extension, par un port d'extension, pour que le piston puisse sortir du corps du vérin afin de pousser la jambe de train hors du caisson.

Par ailleurs, lorsque la jambe de train est dans la position voulue, les ports de rétraction et d'extension sont condamnés, via un électro-clapet par exemple.

Les pressions exercées par le fluide dans les chambres de rétraction et d'extension sont alors maintenues à une valeur constante, du fait du verrouillage hydraulique réalisé à l'aide des électro-clapets, ce qui bloque la position du piston.

Lorsque la jambe de train est sortie, cette jambe de train va subir une sollicitation horizontale en rencontrant un obstacle, une pierre par exemple, qui se répercute nécessairement sur le vérin de rétraction.

Or, le piston étant bloqué, ce piston ne peut pas se déplacer et amortir alors la sollicitation horizontale subie par l'atterrisseur.

On note que ce premier type d'atterrisseur est très répandu dans le domaine aéronautique dans la mesure où il répond bien aux besoins lors de vols se déroulant dans des conditions normales.

Néanmoins, en cas de panne du giravion, il est possible que la vitesse verticale de ce glravion, par exemple en autorotation, soit très importante, cette vitesse verticale dépassant alors grandement les vitesses d'atterrissages normales.

On constate que l'amortisseur de l'atterrisseur ne permet plus d'amortir les chocs dus à l'impact de l'atterrisseur sur le sol, le pouvoir d'absorption des chocs verticaux de l'atterrisseur étant alors dépassé.

On comprend aisément que cette situation peut conduire à des événements malheureusement catastrophiques, l'atterrisseur ne pouvant plus répondre aux besoins notamment en cas de crash du giravion.

Pour y remédier, il est concevable de dimensionner l'amortisseur afin de lui permettre de supporter des sollicitations verticales extrêmes. Toutefois, l'encombrement de l'amortisseur, son poids et son coût deviennent alors prohibitifs.

Par ailleurs, le document US5337976 décrit un vérin de rétraction permettant d'escamoter une jambe de train d'atterrissage d'un giravion, ledit vérin de rétraction comportant:
- une chambre de rétraction et une chambre d'extension séparées par une tête d'un piston,
- ledit piston coulissant dans un fourreau cylindrique,
- un moyen de rappel et une chambre de commande remplie d'un premier fluide,
- ladite chambre de commande étant séparée dudit moyen de rappel par un organe de déblocage mobile,
- ledit organe de déblocage mobile coulissant pour que le vérin de rétraction remplisse une fonction d'amortissement lorsqu'une pression de commande exercée par ledit premier fluide sur ledit organe de déblocage mobile est supérieure à une pression de rappel exercée par ledit moyen de rappel.

Le document FR2608242 décrit un deuxième type d'atterrisseur à balancier muni d'une jambe de train fixée sur la structure du giravion.

De plus, l'atterrisseur est désormais pourvu non pas d'un amortisseur et d'un vérin de rétraction mais d'un vérin-amortisseur.

Le vérin-amortisseur est sensiblement perpendiculaire au sol, alors que la jambe de train est sensiblement parallèle au sol lorsque cette jambe de train est rentrée dans un caisson du giravion.

Le vérin-amortisseur remplit alors les fonctions d'un amortisseur classique mais aussi celles d'un vérin de rétraction, le vérin-amortisseur comportant finalement un vérin de rétraction coulissant dans un amortisseur.

Ce deuxième type d'atterrisseur est pratique du fait de sa simplicité mais peut présenter les mêmes inconvénients que l'atterrisseur du premier type.

En outre, on note qu'il n'est pas possible d'agencer un vérin-amortisseur sur le premier type d'atterrisseur.

En effet, si l'on remplace l'amortisseur du premier type d'atterrisseur par le vérin-amortisseur, il conviendra de conserver le vérin de rétraction pour assurer l'escamotage du train. Le vérin-amortisseur étant intégré dans la jambe de train, ce vérin-amortisseur ne pourra pas escamoter cette jambe.

Par ailleurs, si l'on remplace le vérin de rétraction du premier type d'atterrisseur par le vérin-amortisseur du deuxième type d'atterrisseur, la situation demeurera inchangée. Le vérin-amortisseur pourra escamoter la jambe de train mais n'aura aucune fonction d'amortissement des chocs lors d'un atterrissage à vitesse rapide dans la mesure où ce vérin-amortisseur est uniquement sollicité horizontalement,

Toutefois, le document FR 2687123 prévoit une solution pour résoudre ce dernier inconvénient.

La jambe de train de l'atterrisseur est alors équipée d'une roue dont la fusée, c'est-à-dire l'axe de rotation de la roue, est déportée par rapport à l'axe longitudinal de la jambe de train.

De plus, la jambe de train est munie d'un vérin-amortisseur comportant à la fois un vérin de rétraction et un amortisseur.

Les sollicitations verticales subies par la jambe de train génèrent alors un couple qui tend à rétracter cette jambe de train.

Toutefois, le vérin-amortisseur est alors dimensionné de manière à ce que ledit couple soit inférieur aux sollicitations absorbables par ce vérin-amortisseur.

Par suite, pour pouvoir être efficace en cas de crash du giravion, il faudrait que le vérin-amortisseur soit conçu pour supporter des sollicitations horizontales extrêmes ce qui rendrait son encombrement son poids et son coût rédhibitoires.

De plus, il est relativement difficile de mettre au point un vérin-amortisseur comportant en série un vérin de rétraction et un amortisseur.

La présente invention a pour objet de proposer un vérin de rétraction permettant à un atterrisseur anti-crash de s'affranchir des limitations mentionnées ci-dessus, en remplissant de façon inattendue une fonction d'amortissement lors d'un atterrissage à vitesse rapide puisque ce vérin de rétraction n'est pas soumis à des sollicitations verticales, le vérin de rétraction venant ainsi pallier les limites de l'amortisseur de l'atterrisseur.

Selon l'invention, un vérin de rétraction, permettant d'escamoter une jambe de train d'atterrissage d'un giravion, comporte une chambre de rétraction et une chambre d'extension séparées par une tête d'un piston, ce piston coulissant dans un fourreau cylindrique.

De plus, ce vérin de rétraction comporte un moyen de rappel et une chambre de commande remplie d'un premier fluide, cette chambre de commande étant séparée du moyen de rappel par un organe de déblocage mobile, cet organe de déblocage mobile coulissant pour que le vérin de rétraction remplisse une fonction d'amortissement lorsqu'une pression de commande exercée par le premier fluide sur l'organe de déblocage mobile est supérieure à une pression de rappel exercée par le moyen de rappel.

Par conséquent, lorsque la pression de commande est supérieure à la pression de rappel, l'organe de déblocage mobile du vérin de rétraction se déplace pour transformer le vérin de rétraction en un amortisseur.

De plus, le vérin de rétraction est remarquable en ce qu'il est muni d'une tuyauterie hydraulique qui relie la chambre de commande à une chambre de compression d'un amortisseur agencé sur une jambe de train d'atterrissage de giravion.

Ainsi, lors d'un atterrissage réalisé à grande vitesse, l'amortisseur de l'atterrisseur va devoir amoindrir des sollicitations verticales.

On verra par la suite qu'à partir d'un certain stade, l'amortisseur ne pourra plus remplir sa fonction et transformera le vérin de rétraction en un amortisseur en permettant le déplacement de l'organe de déblocage mobile du vérin de rétraction.

Contrairement aux préjugés existants, le vérin de rétraction selon l'invention peut alors amortir des sollicitations verticales même si ce vérin de rétraction ne subit pas de telles sollicitations.

Selon un premier mode de réalisation, le moyen de rappel est un ressort taré.

Selon un deuxième mode de réalisation, le moyen de rappel comporte une chambre pressurisée remplie par un deuxième fluide.

De préférence, le vérin de rétraction est muni d'un moyen de réglage de la pression de rappel exercée par ledit deuxième fluide remplissant ladite chambre pressurisée.

Par ailleurs, le fourreau cylindrique est avantageusement pourvu d'une pluralité d'alésages radiaux disposés selon la longueur de ce fourreau cylindrique.

Selon une autre variante de l'invention, les alésages radiaux sont réalisés suivant une hélice. Ainsi, un point donné du piston du vérin de rétraction ne passe pas devant l'intégralité des alésages ce qui diminue de manière spectaculaire l'usure du piston.

De même, l'organe de déblocage mobile, qui entoure la périphérie externe du fourreau cylindrique, étant muni d'un tube cylindrique, ce tube cylindrique comporte une pluralité d'ouvertures. Ces ouvertures sont alors disposées en vis-à-vls des alésages radiaux du fourreau cylindrique lorsque la pression de commande exercée par le premier fluide sur l'organe de déblocage mobile est supérieure à une pression de rappel exercée par le moyen de rappel.

En outre, le vérin de rétraction est avantageusement muni d'un canal mettant en relation ses chambres de rétraction et d'extension quand les ouvertures du tube cylindrique sont en vis-à-vis des alésages radiaux.

Dans ces conditions, lorsque la pression exercée par le premier fluide dans la chambre de commande augmente et dépasse la pression de rappel, l'organe de déblocage mobile se déplace axialement, c'est-à-dire selon l'axe de symétrie du piston du vérin de rétraction.

Ce mouvement de translation de l'organe de déblocage mobile permet de mettre les alésages radiaux du fourreau cylindrique en vis à vis des ouvertures de l'organe de déblocage mobile.

La chambre de rétraction du vérin de rétraction communique alors avec sa chambre d'extension par l'intermédiaire du canal qui débouche sur les ouvertures de l'organe de déblocage mobile.

Le piston du vérin de rétraction peut alors se déplacer et pénétrer dans le corps du vérin de rétraction. Or, en se déplaçant le long de son axe de symétrie, le piston obstrue les alésages radiaux les uns après les autres.

Par conséquent, le troisième fluide contenu dans la chambre d'extension du vérin de rétraction s'échappe de moins en moins vite de cette chambre d'extension ce qui génère un amortissement dû au laminage du troisième fluide à travers des trous, l'amortissement devenant de plus en plus important avec l'enfoncement du piston à l'intérieur du corps du vérin de rétraction.

Le déplacement de l'organe de déblocage mobile permet donc au vérin de rétraction de remplir une fonction d'amortissement à partir d'un seuil donné correspondant à la pression de rappel.

De plus, le vérin de rétraction est muni d'une chambre hydraulique de compensation reliée à la chambre de rétraction via un passage hydraulique.

Cette chambre hydraulique évite un blocage du piston. En effet, lors de la rétraction du piston, le troisième fluide passe de la chambre d'extension vers la chambre de rétraction. La chambre de rétraction ne pouvant pas accueillir la totalité du troisième fluide déplacé, du fait notamment de la présence d'une tige du piston, le vérin de rétraction comporte une chambre de compensation vers laquelle le troisième fluide se déplace,

Avantageusement, l'organe de déblocage mobile étant muni d'un tube cylindrique, ce tube cylindrique comporte au moins un perçage radial qui est en vis-à-vis du passage hydraulique de la chambre hydraulique de compensation lorsque la pression de commande exercée par le premier fluide sur l'organe de déblocage mobile est supérieure à une pression de rappel exercée par le moyen de rappel. A contrario, lorsque la pression de commande exercée par le premier fluide sur l'organe de déblocage mobile est inférieure à la pression de rappel exercée par le moyen de rappel, alors ledit perçage radial du tube cylindrique n'est plus en vis-à-vis du passage hydraulique, le tube cylindrique obturant alors ce passage hydraulique.

Enfin, le vérin de rétraction est avantageusement muni d'une chambre pneumatique de compensation séparée de la chambre hydraulique de compensation par un diviseur, une membrane en élastomère par exemple.

Cette chambre pneumatique de compensation permet alors d'adapter le volume de la chambre hydraulique de compensation à la situation.

Par ailleurs, la présente Invention a aussi pour objet un atterrisseur escamotable anti-crash à balancier muni d'un vérin de rétraction selon l'invention.

Un tel atterrisseur escamotable anti-crash d'un giravion comporte une jambe de train équipée d'un ensemble roulant et d'un amortisseur.

L'atterrisseur est remarquable en ce que, un vérin de rétraction selon l'invention étant solidarisé à la jambe de train pour l'escamoter, l'amortisseur commande le vérin de rétraction lorsque le giravion atterrit à une vitesse supérieure à une vitesse prédéterminée afin que le vérin de rétraction remplisse de façon inattendue une fonction d'amortissement.

Eventuellement, pour que le vérin de rétraction remplisse une fonction d'amortissement, l'amortisseur commande la rétraction du vérin de rétraction lorsqu'une sollicitation verticales de cet amortisseur dépasse une limite prédéterminée, cette sollicitation verticale étant sensiblement dirigée selon une direction perpendiculaire au sol.

Par conséquent, lors d'un atterrissage à grande vitesse, une fois sorti de son caisson, l'amortisseur est sensiblement vertical, c'est-à-dire sensiblement perpendiculaire au sol, alors que le vérin de rétraction présente une angulation avec cet amortisseur.

Sous l'effet du choc généré par l'atterrissage, l'amortisseur se rétracte. Toutefois, si la sollicitation verticale exercée sur l'amortisseur est supérieure à une limite prédéterminée, cet amortisseur ne peut pas absorber la totalité de l'énergie libérée par le choc.

L'amortisseur commande alors le vérin de rétraction pour que ce vérin de rétraction puisse à son tour amortir les sollicitations verticales exercées sur la jambe de train.

Cette configuration est très particulière et surprenante puisque l'atterrisseur va finalement amortir des sollicitations, à l'origine verticale, à l'aide d'un équipement, le vérin de rétraction, qui ne devrait pas subir lesdites sollicitations.

Par suite, le vérin de rétraction comporte une chambre de commande reliée à une chambre de compression de l'amortisseur par une tuyauterie hydraulique. On note que le vérin de rétraction et l'amortisseur sont deux équipements distincts reliés par une tuyauterie et ne constituent donc pas un vérin-amortisseur tel que décrit par l'art antérieur et notamment le document FR2608242.

Lors d'un atterrissage, l'amortisseur va se rétracter, la pression régnant dans la chambre de compression et dans la chambre de commande augmentant en conséquence.

De plus, le vérin de rétraction étant muni d'un moyen de rappel, ce vérin de rétraction comporte un organe de déblocage mobile séparant la chambre de commande du moyen de rappel. Ce moyen de rappel maintient l'organe de déblocage mobile contre une butée du vérin de rétraction tant que l'amortisseur n'est pas sollicité verticalement au-delà d'une limite prédéterminée.

Enfin, le vérin de rétraction comportant un piston fixé à la jambe de train qui coulisse dans un fourreau cylindrique muni d'alésages radiaux, l'organe de déblocage mobile étant muni d'un tube cylindrique, le tube cylindrique comporte une pluralité d'ouvertures destinées à être en vis-à-vis des alésages radiaux lorsqu'une sollicitation verticale de l'amortisseur dépasse une limite prédéterminée.

Par ailleurs, la jambe de train étant solidarisée sur une structure du giravion via une attache, l'ensemble roulant étant muni d'au moins une roue tournant autour d'un axe de rotation, cet axe de rotation est déporté par rapport à un axe de fixation perpendiculaire au sol passant par l'attache.

Selon une première variante de l'invention, l'ensemble roulant de l'atterrisseur est muni d'au moins une roue déportée par rapport à l'axe longitudinal de la jambe de train.

Selon une deuxième variante de l'invention, la jambe de train est solidarisée à une structure du giravlon via une attache, cette attache étant déportée par rapport à l'axe longitudinal de la jambe de train.

L'invention et ses avantages apparaîtront avec plus de détails dans le cadre de la description qui suit avec des exemples de réalisation donnés à titre illustratif en référence aux figures annexées qui représentent :
- la figure 1, une vue schématique d'un atterrisseur lorsque le giravion est posé sur le sol.
- la figure 2, une vue schématique d'un atterrisseur rentré dans son caisson,
- la figure 3, une vue schématique d'un atterrisseur lors d'un atterrissage du giravion à grande vitesse,
- la figure 4, une coupe d'un vérin de rétraction selon l'invention, et
- la figure 5, une vue schématique d'une variante d'un atterrisseur selon l'invention,

Les éléments présents dans plusieurs figures distinctes sont affectés d'une seule et même référence.

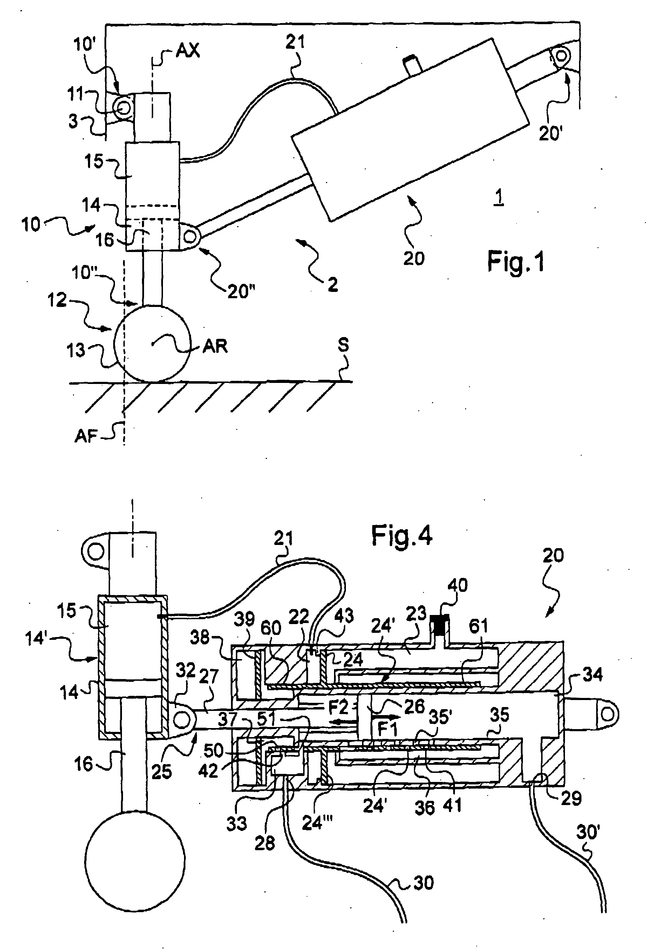

La figure 1 présente une vue schématique d'un atterrisseur 2 de giravion, le giravion étant posé sur le sol.

Cet atterrisseur 2 comporte une jambe de train 10 dont une extrémité fixe 10' est articulée sur une structure 3 du giravion via une attache 11. A contrario, l'extrémité libre 10" de la jambe de train 10 est munie d'un ensemble roulant 12 pourvu d'une roue qui repose sur le sol S.

Entre ces extrémités fixe 10' et libre 10", la jambe de train comporte un amortisseur 14 permettant de dissiper les efforts verticaux subis par la jambe de train 10 lors d'un atterrissage du giravion.

On note que l'axe longitudinal AX de la jambe de train 10 est sensiblement perpendiculaire au sol S lorsque le giravion a atterri.

Par ailleurs, l'atterrisseur 2 est pourvu d'un vérin de rétraction 20 distinct de l'amortisseur 14.

Le vérin de rétraction 20 comporte une première extrémité 20' articulée à l'intérieur d'un caisson 1, dans lequel l'atterrisseur 2 est contenu en vol, alors que se deuxième extrémité 20" est articulée sur la jambe de train 10.

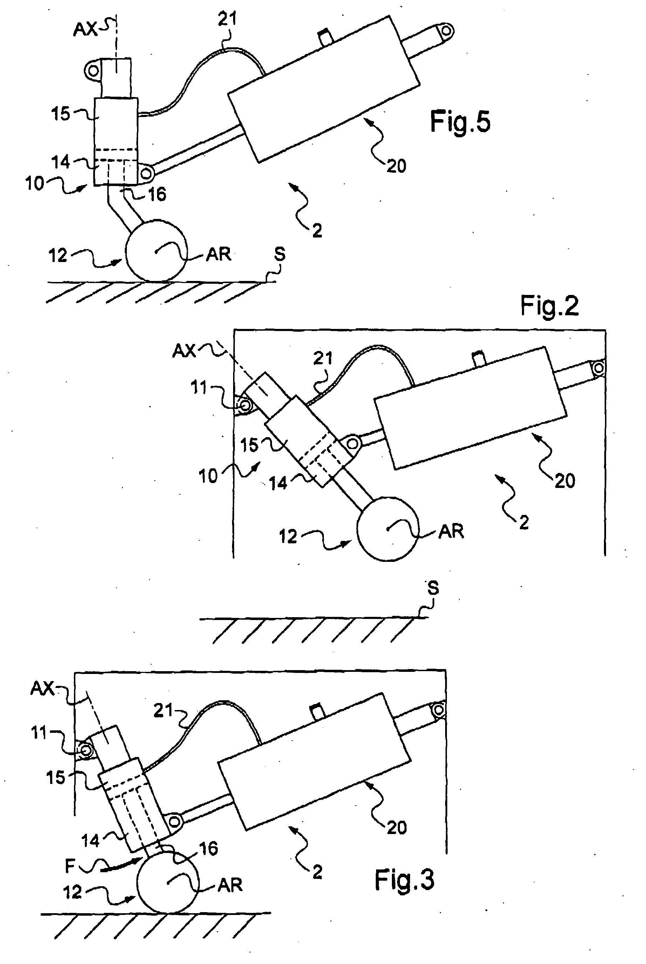

Ce vérin de rétraction 20 a notamment pour but d'escamoter en vol la Jambe de train 10 afin que cette jambe de train 10 rentre dans son caisson 1, conformément à la figure 2.

En effet, le giravion ayant décollé, il n'est plus nécessaire de maintenir l'atterrisseur en position « train sorti ». Par suite, le giravion commande le vérin de rétraction 20. Ce dernier se rétracte alors ce qui entraîne une rotation de la jambe de train 10 autour de son attache 11.

L'atterrisseur 2 est par suite rangé dans le caisson 1 et se trouve en position « train rentré ».

De même, le vérin de rétraction 20 permet de sortir la jambe de train 10 du caisson 1 au moment de l'atterrissage. Un organe de commande du giravion commande alors le vérin de rétraction 20 afin que ce vérin de rétraction 20 s'étende pour sortir la jambe de train 10 du caisson 1.

Par ailleurs, une fois la jambe de train 10 sortie, le vérin de rétraction 20 la maintient dans cette position « train sorti » afin que la jambe de train ne se rétracte pas indûment ce qui conduirait irrémédiablement à un accident.

Toutefois, en référence à la figure 1, le vérin de rétraction 20 est relié à la chambre de compression 15 de l'amortisseur 14 par une tuyauterie hydraulique 21 du vérin de rétraction 20.

Lorsque le giravion se pose à une vitesse exceptionnellement rapide, en cas de crash du giravion par exemple, l'amortisseur 14 peut atteindre la borne maximale de ses possibilités, cet amortisseur 14 ne pouvant plus dissiper la totalité des sollicitations verticales auxquelles est soumise la jambe de train 10.

La vitesse de l'atterrissage étant supérieure à une vitesse prédéterminée, de 3 à 4 mètres par seconde par exemple, pour laquelle l'amortisseur 14 est dimensionné, cet amortisseur 14 va commander le vérin de rétraction 20 via la tuyauterie hydraulique 21 pour que ce vérin de rétraction 20 participe à l'absorption desdites sollicitations verticales.

Par conséquent, lorsque les sollicitations verticales exercées sur la jambe de train 10 dépassent une limite prédéterminée absorbable par l'amortisseur 14, l'amortisseur 14 commande le vérin de rétraction 20. En référence à la figure 3, la jambe de train 10 va effectuer un mouvement rotatif conformément à la flèche F, ce mouvement étant néanmoins amorti par le vérin de rétraction 20.

Il est important de préciser que la rétraction de la jambe de train 10 est partielle, cette jambe de train 10 ne rentrant pas totalement dans le caisson 1 puisqu'elle est freinée et finalement arrêtée par le vérin de rétraction 20.

En effet, l'amortisseur 14 débloque le vérin de rétraction 20 pour que ce dernier ne maintienne plus la jambe de train 10 en position « train sorti ». Les sollicitations verticales exercées sur cette jambe de train 10 provoquent alors sa rotation autour de l'attache 11.

Les sollicitations verticales non absorbées par l'amortisseur 14 sont ainsi transformées en des sollicitations sensiblement horizontales exercées sur le vérin de rétraction 20, ce vérin de rétraction devenant provisoirement un amortisseur.

On comprend bien que le vérin de rétraction ne comporte pas un système d'amortissement agencé en série avec un système de rétraction. Le vérin de rétraction 20 n'est donc pas un vérin-amortisseur mains un vérin de rétraction qui va remplir ponctuellement une fonction d'amortissement en étant commandé par l'amortisseur 14 de la jambe de train 10.

Par suite, le procédé mis en oeuvre par l'invention consiste à amortir des sollicitations sensiblement verticales exercées sur une jambe de train d'un atterrisseur de giravion, en utilisant un vérin de rétraction 20 pouvant être commandé par l'amortisseur 14 de la jambe de train 10.

Lorsque la vitesse du giravion dépasse une vitesse prédéterminée, les sollicitations verticales exercées sur la jambe de train dépassent une limite prédéterminée. Selon le procédé appliqué, l'amortisseur 14 commande donc le vérin de rétraction 20 pour que ce dernier remplisse une fonction d'amortissement, ce vérin de rétraction 20 devenant finalement un amortisseur de façon temporaire.

Une fois le choc dû à l'atterrissage absorbé, l'atterrisseur peut alors retourner dans sa position initiale, à savoir la position « train sorti »,

Pour optimiser le procédé mis en oeuvre par l'atterrisseur 2, l'ensemble roulant 12 étant muni d'au moins une roue 13 tournant autour d'un axe de rotation AR, cet axe de rotation AR est déporté par rapport à un axe de fixation AF perpendiculaire au sol et passant par l'attache 11 de la jambe de train 10.

En effet, les sollicitations exercées sur la jambe de train 10 sont sensiblement verticales mais présentent néanmoins souvent une légère angulation, ces sollicitations dites tout de même « verticales » n'étant plus strictement perpendiculaires au sol. Cette configuration, peut se produire en fonction de la trajectoire du giravion ou même de la pente présentée par le sol S.

Dans ces conditions, la jambe de train 10 tend naturellement à tourner autour de l'attache 11 lorsque l'amortisseur 14 atteint sa borne maximale.

Toutefois, il est possible d'envisager une configuration pour laquelle la position de l'axe longitudinal AX par rapport au sol et la direction des sollicitations verticales exercées sur la jambe de train ne conduisent pas à une rotation de cette jambe de train 10. C'est notamment le cas si le sol est parfaitement horizontal, si l'axe de rotation AR de la roue 13 et l'attache 11 de la jambe de train 10 se situent sur un même axe perpendiculaire au sol S et si les sollicitations verticales exercées sur la jambe de train 10 sont aussi perpendiculaires au sol S.

Ainsi, en déportant l'axe de rotation AR de la roue 13 par rapport à l'axe de fixation AF passant par l'attache 11, on évite une telle situation qui pourrait conduire à un accident.

Selon la variante représentée sur la figure 1, l'attache 11 est déportée par rapport à l'axe longitudinal AX de la jambe de train et par rapport à l'axe de rotation AR de la roue 13.

Selon une autre variante représentée sur la figure 5, c'est l'axe de rotation AR de la roue 12 qui est déportée par rapport à l'axe longitudinal AX de la jambe de train et par rapport à l'axe de fixation AF.

La figure 4 présente une coupe d'un vérin de rétraction 20 selon l'invention solidarisé à un amortisseur 10 d'une jambe de train via une articulation 32.

Ce vérin de rétraction est muni d'une chambre de rétraction 33 séparée d'une chambre d'extension 34 par la tête 26 d'un piston 25.

Ce piston 25 est de plus pourvu d'une tige 27 solidarisée à l'amortisseur 14 via l'articulation 32.

En outre, le piston 25, plus particulièrement sa tête 26, coulisse dans un fourreau cylindrique 35 qui entoure aussi partiellement les chambres de rétraction 33 et d'extension 34.

On note que le fourreau cylindrique 35 comporte une pluralité d'alésages radiaux disposés selon la longueur de ce fourreau cylindrique 35, à savoir selon une direction longitudinale par rapport à ce fourreau cylindrique 35.

Par ailleurs, la rétraction et l'extension du vérin de rétraction 20 sont commandées par un organe de commande du giravion, plus précisément via l'action du pilote qui utilise cet organe de commande non représenté.

Afin de rétracter le vérin de rétraction, l'organe de commande injecte un troisième fluide, de l'huile par exemple, dans un port de rétraction 28 du vérin de rétraction 20.

La pression dans la chambre de rétraction 33 augmente ce qui induit un déplacement du piston 25 selon la flèche F1. Ce piston 25 pénètre donc dans le corps du vérin de rétraction 20.

Ce vérin de rétraction 20 se rétracte donc et rentre la jambe de train dans son caisson, l'atterrisseur se trouvant en position « train rentré ».

Le piston 25 s'étant déplacé, la chambre d'extension se vide, le troisième fluide s'échappant par le port d'extension 29 et le tuyau 30'.

A contrario, pour sortir la jambe de train, l'organe de commande injecte un troisième fluide dans le tuyau 30'. Ce troisième fluide pénètre alors dans un port d'extension 29 du vérin de rétraction 20.

La pression dans la chambre d'extension 34 augmente ce qui induit un déplacement du piston 25 selon la flèche F2. Ce piston 25 sort donc du corps du vérin de rétraction 20.

Ce vérin de rétraction 20 s'étend alors et sort la jambe de train de son caisson, l'atterrisseur se trouvant en position « train sorti ».

Le piston 25 s'étant déplacé, la chambre de rétraction se vide, le troisième fluide s'échappant par le port de rétraction 28 et le tuyau 30.

Lorsque l'atterrisseur est en position « train sorti », l'organe de commande bloque le circuit hydraulique alimentant le port de rétraction 28 et d'extension 29 via des clapets non représentés.

Les pressions du troisième fluide régnant dans les chambre de rétraction 33 et d'extension 34 sont alors figées ce qui maintient la jambe de train en position « train sorti ».

On comprend bien qu'en procédant de manière identique, l'organe de commande peut maintenir la jambe de train en position « train rentré ».

Par ailleurs, le vérin de rétraction 20 comporte une chambre de commande 22 remplie d'un premier fluide, ladite chambre de commande étant annulaire et ainsi agencée autour du fourreau cylindrique 35 dans lequel coulisse la tête 26 du piston 25, Cette chambre de commande 22 est séparée d'un moyen de rappel 23 par un organe de déblocage mobile 24.

En condition normale, le moyen de rappel exerce une pression de rappel sur l'organe de déblocage mobile 24 afin que cet organe de déblocage mobile 24 soit bloqué contre une butée 43.

Selon un premier mode de réalisation non représenté, le moyen de rappel est un ressort taré.

En référence à la figure 4, selon un deuxième mode de réalisation, le moyen de rappel comporte une chambre pressurisée 23 remplie par un deuxième fluide, cette chambre pressurisée 23 étant annulaire et disposée autour du fourreau cylindrique 35 dans lequel coulisse la tête 26 du piston 25. Un moyen de réglage 40 permet alors de régler la pression de rappel exercée par le deuxième fluide.

En outre, l'organe de déblocage mobile 24 est composé d'un tube cylindrique 24', qui entoure notamment la périphérie externe 41 du fourreau cylindrique 35, et d'une lèvre 24"' perpendiculaire à ce tube cylindrique 24', la lèvre 24"' séparant la chambre de commande 22 du moyen de rappel 23.

Le tube cylindrique 24' comporte alors une partie supérieure 61 située au dessus de la lèvre 24''', plus précisément à droite de cette lèvre 24"' sur la figure 4, et une partie inférieure 60 située en dessous de la lèvre 24''', plus précisément à gauche de cette lèvre 24''' sur la figure 4.

Le tube cylindrique 24' est alors avantageusement muni d'ouvertures radiales 24", dans sa partie supérieure 61, agencées selon la longueur de ce tube cylindrique 24'. On verra que ces ouvertures 24" sont susceptibles d'être positionnées en vis-é-vis des alésages radiaux 35' du fourreau cylindrique 35 dans des conditions extrêmes.

Par conséquent, l'atterrisseur du giravion est équipé d'un vérin de rétraction 20 selon l'invention.

De plus, cet atterrisseur comporte un amortisseur 14 disposé sur la jambe de train de l'atterrisseur.

L'amortisseur 14 est muni d'un élément longiligne 16, tel qu'un piston, qui pénètre dans un carter 14'. L'élément longiligne 16 obstrue ainsi une chambre de compression 15 de l'amortisseur 14.

On note aussi que la chambre de compression 15 est reliée à la chambre de commande 22 du vérin de rétraction via une tuyauterie hydraulique 21. En effet, une première zone extrémale de cette tuyauterie hydraulique 21 est fixée au carénage extérieur du vérin de rétraction par de manière à déboucher sur la chambre de commande 22, alors qu'une deuxième zone extrémale de la tuyauterie hydraulique 21 débouche sur la chambre de compression 15 de l'amortisseur.

Lors de l'atterrissage du giravion, les sollicitations verticales exercées sur la jambe de train poussent l'élément longiligne 16 qui comprime le deuxième fluide contenu dans la chambre de compression 14 de manière à absorber ces sollicitations.

Dans des conditions normales, la pression de commande exercée par le deuxième fluide dans la chambre de commande 22 sur l'organe de déblocage mobile 24 augmente mais reste tout de même inférieure à la pression de rappel exercée par le moyen de rappel 23.

L'organe de déblocage mobile 24 reste donc bloqué contre la butée 43,

Toutefois, lorsque l'amortisseur 14 subi une sollicitation verticale dépassant une limite prédéterminée, en cas de crash du giravion par exemple, l'élément longiligne 16 de l'amortisseur progresse rapidement à l'intérieur du carter 14', cet amortisseur ne pouvant plus absorber la totalité de ladite sollicitation verticale.

Le premier fluide remplissant la chambre de compression est alors transféré dans la chambre de commande 22 du vérin de rétraction par la tuyauterie hydraulique 21 de ce vérin de rétraction.

Par suite, la pression de commande dans la chambre de commande 22 augmente rapidement jusqu'à devenir supérieure à la pression de rappel.

Le moyen de rappel 23 ne peut ensuite plus bloquer l'organe de déblocage mobile qui se met à coulisser le long du fourreau cylindrique 35. De cette manière, l'amortisseur 14 ordonne mécaniquement au vérin de rétraction de remplir une fonction d'amortissement.

Jusqu'à présent, le tube cylindrique 24' de l'organe de déblocage mobile 24 obturerait les alésages radiaux du fourreau cylindrique,

Toutefois, la translation de ce tube cylindrique 24' provoque de fait une translation des ouvertures 24" du tube cylindrique 24, ces ouvertures 24" étant désormais en vis-à-vls des alésages radiaux.

Par suite, la chambre d'extension 34 du vérin de rétraction n'est plus hermétiquement close, des sections de fuite étant générées par l'alignement des ouvertures 24" sur les alésages radiaux 35'.

Le vérin de rétraction n'est alors plus verrouillé hydrauliquement, La jambe de train se met donc à basculer autour de son attache 11, les sollicitations verticales qu'elle subissait étant transformées en des sollicitations horizontales exercées sur le vérin de rétraction.

Le vérin de rétraction comportant un canal 36, dans lequel débouche la partie supérieure 61 du tube cylindrique 24', le troisième fluide contenu dans la chambre d'extension 34 emprunte les alésages radiaux 35' puis les ouvertures 24" et le canal 36 pour se rendre dans la chambre de rétraction 33.

Le passage du troisième fluide dans les alésages radiaux 35' et les ouvertures 24" génère un laminage de ce troisième fluide qui induit un amortissement des sollicitations horizontales.

On remarque qu'en se déplaçant selon la flèche F1, le piston obture progressivement les alésages radiaux 35'. La section de fuite du troisième fluide diminue donc avec la progression du piston ce qui implique que l'amortissement est aussi progressif en devenant de plus en plus Important.

Par suite, le déplacement de la jambe de train est rapidement stoppé, l'amortissement étant réalise en douceur.

Ainsi, en étant commandé par l'amortisseur 14, le vérin de rétraction 20 se transforme en un amortisseur et participe activement à l'absorption des sollicitations verticales subis par la jambe de train au cours d'un atterrissage se produisant à une vitesse importante dépassant une vitesse prédéterminée.

En outre, on constate que la tige 27 du piston réduit le volume de la chambre de rétraction 33, une telle réduction n'étant pas présente dans la chambre d'extension.

Il est donc intéressant de compenser cette réduction.

Par conséquent, le vérin de rétraction est muni d'une chambre hydraulique de compensation 37 reliée à la chambre de rétraction 33 par un passage hydraulique 42.

En outre, l'organe de déblocage mobile 24 étant muni d'un tube cylindrique 24', ce tube cylindrique 24' comporte un perçage radial 50, dans sa partie inférieure 60, qui est en vis-à-vis du passage hydraulique 42 de la chambre hydraulique de compensation lorsque la pression de commande exercée par le premier fluide sur l'organe de déblocage mobile 24 est supérieure à la pression de rappel exercée par le moyen de rappel 23. A contrario, lorsque la pression de commande exercée par le premier fluide sur l'organe de déblocage mobile 24 est inférieure à la pression de rappel exercée par le moyen de rappel 23, ledit perçage radial 50 du tube cylindrique n'est plus en vis-à-vis du passage hydraulique 42, le tube cylindrique obturant alors ce passage hydraulique 42.

La chambre hydraulique de compensation 37 est donc uniquement ouverte dans des conditions particulières, à savoir quand l'organe de déblocage mobile 24 se déplace sous l'effet de la pression de commande régnant dans la chambre de commande.

Ainsi, quand la pression de commande est supérieure à la pression de rappel exercée par le moyen de rappel 23, l'organe de déblocage mobile se déplace de manière à placer ces ouvertures 24" et son perçage radial 50 respectivement en vis-à-vis des alésages radiaux 35' et du passage hydraulique 42. Lors de l'enfoncement du piston 25 dans la chambre d'extension 34, le troisième fluide contenu dans la chambre d'extension 34 passe alors par le canal 36 pour se rendre dans la chambre de rétraction puis pénètre dans la chambre hydraulique de compensation 37 via le passage hydraulique 42 est le perçage radial 50.

On note que ce troisième fluide ne s'échappe pas par le port de rétraction 28 dans la mesure où le giravion obture le tuyau 30 par des moyens usuels non représentés. En effet, les tuyaux 30 et 30' sont uniquement débloqués par lesdits moyens lorsque le giravion commande l'extension ou la rétraction du vérin de rétraction 20.

En outre, afin de pouvoir déboucher à l'intérieur de la chambre hydraulique de compensation 37, la partie inférieure 60 du tube cylindrique 24' traverse partiellement la chambre de rétraction 33. Par suite, cette partie inférieure 60 du tube cylindrique comporte une fente 51 pour que le tube cylindrique 24' ne scinde pas la chambre de rétraction 33 en deux chambres distinctes.

De plus, le vérin de rétraction est pourvu d'une chambre pneumatique de compensation 38 séparée de la chambre hydraulique de compensation par un diviseur 39. Ce diviseur permet d'éviter que le quatrième fluide, de l'air ou de l'azote par exemple, contenu dans la chambre pneumatique de compensation se mélange avec le troisième fluide, du fait de leur densité respective.

Au fur et à mesure de la progression du piston 25, la pression du troisième fluide dans la chambre hydraulique de compensation 37 augmente ce qui induit un déplacement du diviseur 39, dans la mesure où la pression du quatrième fluide dans la chambre pneumatique de compensation 38 est inférieure à la pression du troisième fluide dans la chambre hydraulique de compensation 37.

Ainsi, le volume de la chambre hydraulique de compensation 37 augmente, cette chambre hydraulique de compensation 37 pouvant donc accueillir le troisième fluide provenant de la chambre d'extension 34.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention,

## Revendications

1. Vérin de rétraction (20) permettant d'escamoter une jambe de train (10) d'atterrissage d'un giravion, ledit vérin de rétraction (20) comportant une chambre de rétraction (33) et une chambre d'extension (34) séparées par une tête (26) d'un piston (25), ledit piston (25) coulissant dans un fourreau cylindrique (35), ledit vérin comportant un moyen de rappel (23) et une chambre de commande (22) remplie d'un premier fluide, ladite chambre de commande (22) étant séparée dudit moyen de rappel (23) par un organe de déblocage mobile (24), ledit organe de déblocage mobile (24) coulissant pour que le vérin de rétraction (20) remplisse une fonction d'amortissement lorsqu'une pression de commande exercée par ledit premier fluide sur ledit organe de déblocage mobile (24) est supérieure à une pression de rappel exercée par ledit moyen de rappel (23),
**caractérisé en ce que** ledit vérin de rétraction (20) est muni d'une tuyauterie hydraulique (21) apte à relier ladite chambre de commande (22) à une chambre de compression (15) d'un amortisseur (14) agencé sur une jambe de train (10) d'atterrissage de giravion.

2. Vérin de rétraction selon l'une quelconque des revendications précédentes,
**caractérisé en ce que** ledit moyen de rappel est un ressort taré.

3. Vérin de rétraction selon l'une quelconque des revendications précédentes,
**caractérisé en ce que** ledit moyen de rappel comporte une chambre pressurisée (23) remplie par un deuxième fluide.

4. Vérin de rétraction selon la revendication 3,
**caractérisé en ce qu'**il est muni d'un moyen de réglage (40) de la pression de rappel exercée par ledit deuxième fluide remplissant ladite chambre pressurisée (23).

5. Vérin de rétraction selon l'une quelconque des revendications précédentes,
**caractérisé en ce que** ledit fourreau cylindrique (35) est pourvu d'une pluralité d'alésages radiaux (35') disposés selon la longueur de ce fourreau cylindrique (35).

6. Vérin de rétraction selon la revendication 5,
**caractérisé en ce que** ledit organe de déblocage mobile (24) entoure la périphérie externe (41) dudit fourreau cylindrique (35).

7. Vérin de rétraction selon l'une quelconque des revendications 5 à 6,
**caractérisé en ce que** ledit organe de déblocage mobile (24) étant muni d'un tube cylindrique (24'), ledit tube cylindrique (24') comporte une pluralité d'ouvertures (24") disposées en vis-à-vis desdits alésages radiaux (35') lorsque la pression de commande exercée par ledit premier fluide sur ledit organe de déblocage mobile (24) est supérieure à une pression de rappel exercée par ledit moyen de rappel (23).

8. Vérin de rétraction selon la revendication 7,
**caractérisé en ce qu'**il est muni d'un canal (36) mettant en relation lesdites chambres de rétraction (33) et d'extension (34) quand les ouvertures (24") du tube cylindrique (24') sont en vis-à-vis des alésages radiaux (35').

9. Vérin de rétraction selon la revendication 8,
**caractérisé en ce qu'**il est muni d'une chambre hydraulique de compensation (37) reliée à la chambre de rétraction (33) via un passage hydraulique (42).

10. Vérin de rétraction selon la revendication 9,
**caractérisé en ce que**, ledit organe de déblocage mobile (24) étant muni d'un tube cylindrique (24'), ce tube cylindrique (24') comporte au moins un perçage radial (50) qui est en vis-à-vis dudit passage hydraulique (42) de la chambre hydraulique de compensation (37) lorsque la pression de commande exercée par le premier fluide sur l'organe de déblocage mobile (24) est supérieure à une pression de rappel exercée par le moyen de rappel (23).

11. Vérin de rétraction selon l'une quelconque des revendications 9 à 10,
**caractérisé en ce qu'**il est muni d'une chambre pneumatique de compensation (38) séparée de ladite chambre hydraulique de compensation (37) par un diviseur (39).

12. Atterrisseur (2) escamotable anti-crash d'un giravion comportant une jambe de train (10) équipée d'un ensemble roulant (12) et d'un amortisseur (14),
**caractérisé en ce que**, un vérin de rétraction (20) selon l'une quelconque des revendications précédentes est solidarisé à ladite jambe de train (10) pour l'escamoter, ledit amortisseur (14) commandant ledit vérin de rétraction (20) lorsque ledit giravion atterrit à une vitesse supérieure à une vitesse prédéterminée afin que le vérin de rétraction remplisse une fonction d'amortissement,

13. Atterrisseur selon la revendication 12,
**caractérisé en ce que**, pour que le vérin de rétraction (20) remplisse une fonction d'amortissement, ledit amortisseur (14) commande la rétraction dudit vérin de rétraction (20) lorsqu'une sollicitation verticale de cet amortisseur (14) dépasse une limite prédéterminée, ladite sollicitation verticale étant dirigée selon une direction sensiblement perpendiculaire au sol.

14. Atterrisseur selon l'une quelconque des revendications 12 à 13,
**caractérisé en ce que**, ladite jambe de train étant solidarisée sur une structure du giravion via une attache (11), ledit ensemble roulant (12) étant muni d'au moins une roue (13) tournant autour d'un axe de rotation (AR), ledit axe de rotation (AR) est déporté par rapport à un axe de fixation (AF) perpendiculaire au sol passant par ladite attache (11).

15. Atterrisseur selon la revendication 14,
**caractérisé en ce que** ledit ensemble roulant (12) est muni d'au moins une roue (13) déportée par rapport à l'axe longitudinal (AX) de ladite jambe de train (10).

16. Atterrisseur selon l'une quelconque des revendications 14 à 15.
**caractérisé en ce que**, ladite jambe de train (10) est solidarisée à une structure (3) du giravion via une attache (11), ladite attache (11) étant déportée par rapport à l'axe longitudinal (AX) de ladite jambe de train (10).

17. Atterrisseur selon l'une quelconque des revendications 12 à 16,
**caractérisé en ce que** ledit vérin de rétraction (20) comporte une chambre de commande (22) reliée à une chambre de compression (15) dudit amortisseur (14) par un tuyau hydraulique (21).

18. Atterrisseur selon l'une quelconque des revendications 12 à 17,
**caractérisé en ce que**, ledit vérin de rétraction (20) étant muni d'un moyen de rappel (23), ce vérin de rétraction (20) comportant un organe de déblocage mobile (24) séparant ladite chambre de commande (22) dudit moyen de rappel (23), ledit moyen de rappel (23) maintient ledit organe de déblocage mobile (24) contre une butée (43) dudit vérin de rétraction (20) tant que ledit amortisseur (14) n'est pas sollicité verticalement au-delà d'une limite prédéterminée.

19. Atterrisseur selon l'une quelconque des revendications 12 à 18,
**caractérisé en ce que**, ledit vérin de rétraction (20) comportant un piston (25) fixé à ladite jambe de train (10) et coulissant dans un fourreau cylindrique (35) muni d'alésages radiaux (35'), ledit organe de déblocage mobile (24) étant muni d'un tube cylindrique (24'), ledit tube cylindrique (24') comporte une pluralité d'ouvertures (24") destinées à être en vis-à-vis desdits alésages radiaux (35') lorsqu'une sollicitation verticale de l'amortisseur dépasse une limite prédéterminée.

## Claims

1. Retraction cylinder (20) making it possible to retract a leg (10) of a rotorcraft landing gear, the said retraction cylinder (20) comprising a retraction chamber (33) and an extension chamber (34) separated by a head (26) of a piston (25), the said piston (25) sliding in a cylindrical sheath (35), the said cylinder comprising a return means (23) and a control chamber (22) filled with a first fluid, the said control chamber (22) being separated from the said return means (23) by a movable release member (24), the said movable release member (24) sliding so that the retraction cylinder (20) fulfils a damping function when a control pressure exerted by the said first fluid on the said movable release member (24) is greater than a return pressure exerted by the said return means (23),
**characterised in that** the said retraction cylinder (20) is furnished with a hydraulic pipe (21) capable of connecting the said control chamber (22) to a compression chamber (15) of a damper (14) arranged on a rotorcraft landing gear leg (10).

2. Retraction cylinder according to any one of the preceding claims,
**characterised in that** the said return means is a preloaded spring.

3. Retraction cylinder according to any one of the preceding claims,
**characterised in that** the said return means comprises a pressurised chamber (23) filled with a second fluid.

4. Retraction cylinder according to Claim 3,
**characterised in that** it is furnished with a means (40) for adjusting the return pressure exerted by the said second fluid filling the said pressurised chamber (23).

5. Retraction cylinder according to any one of the preceding claims,
**characterised in that** the said cylindrical sheath (35) is provided with a plurality of radial bores (35') placed along the length of this cylindrical sheath (35).

6. Retraction cylinder according to Claim 5,
**characterised in that** the said movable release member (24) surrounds the outer periphery (41) of the said cylindrical sheath (35).

7. Retraction cylinder according to any one of Claims 5 to 6,
**characterised in that** the said movable release member (24) being furnished with a cylindrical tube (24'), the said cylindrical tube (24') comprises a plurality of openings (24") placed opposite the said radial bores (35') when the control pressure exerted by the said first fluid on the said movable release member (24) is greater than a return pressure exerted by the said return means (23).

8. Retraction cylinder according to Claim 7,
**characterised in that** it is furnished with a channel (36) placing the said retraction chamber (33) and extension chamber (34) in communication when the openings (24") of the cylindrical tube (24') are opposite the radial bores (35') .

9. Retraction cylinder according to Claim 8,
**characterised in that** it is furnished with a hydraulic compensation chamber (37) connected to the retraction chamber (33) via a hydraulic passageway (42).

10. Retraction cylinder according to Claim 9,
**characterised in that**, the said movable release member (24) being furnished with a cylindrical tube (24'), this cylindrical tube (24') comprises at least one radial hole (50) which is opposite the said hydraulic passageway (42) of the hydraulic compensation chamber (37) when the control pressure exerted by the first fluid on the movable release member (24) is greater than a return pressure exerted by the return means (23).

11. Retraction cylinder according to any one of Claims 9 to 10,
**characterised in that** it is furnished with a pneumatic compensation chamber (38) separated from the said hydraulic compensation chamber (37) by a divider (39).

12. Rotorcraft anti-crash retractable undercarriage (2) comprising a landing gear leg (10) fitted with a rolling assembly (12) and a damper (14),
**characterised in that**, a retraction cylinder (20) according to any one of the preceding claims is attached to the said landing gear leg (10) in order to retract it, the said damper (14) controlling the said retraction cylinder (20) when the said rotorcraft lands at a speed greater than a predetermined speed in order that the retraction cylinder fulfils a damping function.

13. Undercarriage according to Claim 12,
**characterised in that**, in order for the retraction cylinder (20) to fulfil a damping function, the said damper (14) controls the retraction of the said retraction cylinder (20) when a vertical stress of this damper (14) exceeds a predetermined limit, the said vertical stress being directed in a direction substantially perpendicular to the ground.

14. Undercarriage according to any one of Claims 12 to 13,
**characterised in that**, the said landing gear leg being attached to a structure of the rotorcraft via an attachment (11), the said rolling assembly (12) being furnished with at least one wheel (13) rotating about an axis of rotation (AR), the said axis of rotation (AR) is offset relative to an axis of attachment (AF) perpendicular to the ground passing through the said attachment (11).

15. Undercarriage according to Claim 14,
**characterised in that** the said rolling assembly (12) is furnished with at least one wheel (13) offset relative to the longitudinal axis (AX) of the said landing gear leg (10).

16. Undercarriage according to any one of Claims 14 to 15,
**characterised in that** the said landing gear leg (10) is attached to a structure (3) of the rotorcraft via an attachment (11), the said attachment (11) being offset relative to the longitudinal axis (AX) of the said landing gear leg (10).

17. Undercarriage according to any one of Claims 12 to 16,
**characterised in that** the said retraction cylinder (20) comprises a control chamber (22) connected to a compression chamber (15) of the said damper (14) via a hydraulic pipe (21).

18. Undercarriage according to any one of Claims 12 to 17,
**characterised in that**, the said retraction cylinder (20) being furnished with a return means (23), this retraction cylinder (20) comprising a movable release member (24) separating the said control chamber (22) from the said return means (23), the said return means (23) holds the said movable release member (24) against a stop (43) of the said retraction cylinder (20) while the said damper (14) is not stressed vertically beyond a predetermined limit.

19. Undercarriage according to any one of Claims 12 to 18,
**characterised in that**, the said retraction cylinder (20) comprising a piston (25) attached to the said landing gear leg (10) and sliding in a cylindrical sheath (35) furnished with radial bores (35'), the said movable release member (24) being furnished with a cylindrical tube (24'), the said cylindrical tube (24') comprises a plurality of openings (24") designed to be opposite the said radial bores (35') when a vertical stress of the damper exceeds a predetermined limit.

## Patentansprüche

1. Einziehstellzylinder (20), der das Einziehen eines Fahrwerkbeins (10) eines Drehflügelflugzeugs ermöglicht, wobei der Einziehstellzylinder (20) eine Einziehkammer (33) und eine Ausfahrkammer (34) aufweist, die durch einen Kopf (26) eines Kolbens (25) getrennt sind, wobei der Kolben (25) in einer zylindrischen Hülse (35) gleitet, wobei der Stellzylinder ein Rückstellmittel (23) und eine mit einem ersten Fluid gefüllte Steuerkammer (22) umfasst, wobei die Steuerkammer (22) von dem Rückstellmittel (23) durch ein bewegliches Entsperrorgan (24) getrennt ist, wobei das bewegliche Entsperrorgan (24) gleitet, damit der Einziehstellzylinder (20) eine Dämpfungsfunktion erfüllt, wenn der durch das erste Fluid auf das bewegliche Entsperrorgan (24) ausgeübte Steuerdruck größer als ein durch das Rückstellmittel (23) ausgeübter Rückstelldruck ist,
**dadurch gekennzeichnet, dass** der Einziehstellzylinder (20) mit einer Hydraulikrohrleitung (21) versehen ist, die die Steuerkammer (22) mit einer Kompressionskammer (15) eines Dämpfers (14) verbinden kann, der an einem Fahrwerkbein (10) des Drehflügelflugzeugs angeordnet ist.

2. Einziehstellzylinder nach einem der vorhergehenden Ansprüche,
**dadurch gekennzeichnet, dass** das Rückstellmittel eine austarierte Feder ist.

3. Einziehstellzylinder nach einem der vorhergehenden Ansprüche,
**dadurch gekennzeichnet, dass** das Rückstellmittel eine Druckkammer (23) umfasst, die mit einem zweiten Fluid gefüllt ist.

4. Einziehstellzylinder nach Anspruch 3,
**dadurch gekennzeichnet, dass** er mit einem Mittel (40) zum Einstellen des Rückstelldrucks, der durch das zweite Fluid ausgeübt wird, mit dem die Druckkammer (23) gefüllt ist, versehen ist.

5. Einziehstellzylinder nach einem der vorhergehenden Ansprüche,
**dadurch gekennzeichnet, dass** die zylindrische Hülse (35) mit mehreren radialen Bohrungen (35') versehen ist, die in Längsrichtung dieser zylindrischen Hülse (35) angeordnet sind.

6. Einziehstellzylinder nach Anspruch 5,
**dadurch gekennzeichnet, dass** das bewegliche Entsperrorgan (24) den äußeren Umfang (41) der zylindrischen Hülse (35) umgibt.

7. Einziehstellzylinder nach einem der Ansprüche 5 bis 6,
**dadurch gekennzeichnet, dass** dann, wenn das bewegliche Entsperrorgan (24) mit einem zylindrischen Rohr (24') versehen ist, dieses zylindrische Rohr (24') mehrere Öffnungen (24") aufweist, die gegenüber den radialen Bohrungen (35') angeordnet sind, wenn der durch das erste Fluid auf das bewegliche Entsperrorgan (24) ausgeübte Steuerdruck höher ist als ein Rückstelldruck, der durch das Rückstellmittel (23) ausgeübt wird.

8. Einziehstellzylinder nach Anspruch 7,
**dadurch gekennzeichnet, dass** er mit einem Kanal (36) versehen ist, der die Einziehkammer (33) und die Ausfahrkammer (34) miteinander in Beziehung bringt, wenn sich die Öffnungen (24") des zylindrischen Rohrs (24') gegenüber den radialen Bohrungen (35') befinden.

9. Einziehstellzylinder nach Anspruch 8,
**dadurch gekennzeichnet, dass** er mit einer Kompensations-Hydraulikkammer (37) versehen ist, die mit der Einziehkammer (33) über einen Hydraulikdurchlass (42) verbunden ist.

10. Einziehstellzylinder nach Anspruch 9,
**dadurch gekennzeichnet, dass** dann, wenn das bewegliche Entsperrorgan (24) mit einem zylindrischen Rohr (24') versehen ist, dieses zylindrische Rohr (24') wenigstens eine radiale Durchlochung (50) aufweist, die sich gegenüber dem Hydraulikdurchlass (42) der Kompensations-Hydraulikkammer (37) befindet, wenn der durch das erste Fluid auf das bewegliche Entsperrorgan (24) ausgeübte Steuerdruck größer ist als ein Rückstelldruck, der durch das Rückstellmittel (23) ausgeübt wird.

11. Einziehstellzylinder nach einem der Ansprüche 9 bis 10,
**dadurch gekennzeichnet, dass** er mit einer Kompensations-Druckluftkammer (38) versehen ist, die von der Kompensations-Hydraulikkammer (37) durch einen Teiler (39) getrennt ist.

12. Einziehbares Fahrwerk (2) mit Anprallverhinderung eines Drehflügelflugzeugs, das ein Bein (10) aufweist, das mit einer Rollanordnung (12) und einer Dämpfung (14) ausgerüstet ist,
**dadurch gekennzeichnet, dass** mit dem Bein (10) ein Einziehstellzylinder (20) nach einem der vorhergehenden Ansprüche fest verbunden ist, um es einzuziehen, wobei der Dämpfer (14) den Einziehstellzylinder (20) steuert, wenn das Drehflügelflugzeug mit einer Geschwindigkeit landet, die höher ist als eine vorgegebene Geschwindigkeit, damit der Einziehstellzylinder eine Dämpfungsfunktion erfüllt.

13. Fahrwerk nach Anspruch 12,
**dadurch gekennzeichnet, dass**, damit der Einziehstellzylinder (20) eine Dämpfungsfunktion erfüllt, der Dämpfer (14) das Einziehen des Einziehstellzylinders (20) steuert, wenn eine vertikale Beanspruchung dieses Dämpfers (14) eine vorgegebene Grenze übersteigt, wobei die vertikale Beanspruchung in eine zum Boden im Wesentlichen senkrechte Richtung gelenkt wird.

14. Fahrwerk nach einem der Ansprüche 12 bis 13,
**dadurch gekennzeichnet, dass** dann, wenn das Bein an der Struktur des Drehflügelflugzeugs über ein Verbindungsstück (11) fest verbunden ist und die Rollanordnung (12) mit wenigstens einem Rad (13), das sich um eine Drehachse (AR) dreht, versehen ist, diese Drehachse (AR) in Bezug auf eine Befestigungsachse (AF), die zum Boden senkrecht ist und durch das Verbindungsstück (11) verläuft, versetzt ist.

15. Fahrwerk nach Anspruch 14,
**dadurch gekennzeichnet, dass** die Rollanordnung (12) mit wenigstens einem Rad (13) versehen ist, das in Bezug auf die Längsachse (AX) des Beins (10) versetzt ist.

16. Fahrwerk nach einem der Ansprüche 14 bis 15,
**dadurch gekennzeichnet, dass** das Bein (10) über ein Verbindungsstück (11) mit einer Struktur (3) des Drehflügelflugzeugs fest verbunden ist, wobei das Verbindungsstück (11) in Bezug auf die Längsachse (AX) des Beins (10) versetzt ist.

17. Fahrwerk nach einem der Ansprüche 12 bis 16,
**dadurch gekennzeichnet, dass** der Einziehstellzylinder (20) eine Steuerkammer (22) aufweist, die durch eine Hydraulikrohrleitung (21) mit einer Kompressionskammer (15) des Dämpfers (14) verbunden ist.

18. Fahrwerk nach einem der Ansprüche 12 bis 17,
**dadurch gekennzeichnet, dass** dann, wenn der Einziehstellzylinder (20) mit einem Rückstellmittel (23) versehen ist und dieser Einziehstellzylinder (20) ein bewegliches Entsperrorgan (24) aufweist, das die Steuerkammer (22) von dem Rückstellmittel (23) trennt, dieses Rückstellmittel (23) das bewegliche Entsperrorgan (24) gegen einen Anschlag (43) des Einziehstellzylinders (20) hält, so lange der Dämpfer (14) vertikal nicht über eine vorgegebene Grenze hinaus beansprucht wird.

19. Fahrwerk nach einem der Ansprüche 12 bis 18,
**dadurch gekennzeichnet, dass** dann, wenn der Einziehstellzylinder (20) einen an dem Bein (10) befestigten Kolben (25) aufweist, der in einer zylindrischen Hülse (35) gleitet, die mit radialen Bohrungen (35') versehen ist, und das bewegliche Entsperrorgan (24) mit einem zylindrischen Rohr (24') versehen ist, dieses zylindrische Rohr (24') mehrere Öffnungen (24") aufweist, die dazu bestimmt sind, dass sie sich gegenüber den radialen Bohrungen (35') befinden, wenn eine vertikale Beanspruchung des Dämpfers eine vorgegebene Grenze übersteigt.
